# EUROPÄISCHE PATENTSCHRIFT

(11) **EP 1 869 334 B1**
(45) Veröffentlichungstag und Bekanntmachung des Hinweises auf die Patenterteilung: **20.08.2008**
(21) Anmeldenummer: 06722784.3
(22) Anmeldetag: 11.04.2006
(51) Int. Cl.: F16C 33/08, F16C 33/20

(54) **GLEITLAGER, GLEITLAGERSYSTEM UND MONTAGE EINES GLEITLAGERSYSTEMS**
SLIDE BEARING, SLIDE BEARING SYSTEM AND ASSEMBLY OF A SLIDE BEARING SYSTEM
PALIER LISSE, SYSTEME DE PALIER LISSE ET MONTAGE D'UN SYSTEME DE PALIER LISSE

(30) Priorität: 11.04.2005 DE 202005005827 U
(43) Veröffentlichungstag der Anmeldung: 26.12.2007
(73) Patentinhaber: igus GmbH, 51147 Köln (DE)
(72) Erfinder: BLASE, Günter, 51429 Bergisch Gladbach (DE); SELZER, Ralf, 53797 Lohmar-Heide (DE); KLINGSHIRN, Christoph, 53859 Niederkassel (DE); BAUS, Gerhard, 53578 Windhagen (DE); FETH, Markus, 53229 Bonn-Beuel (DE); BLASE, Frank, 51429 Bergisch Gladbach (DE)
(74) Vertreter: Stachow, Ernst-Walther
(86) Internationale Anmeldenummer: PCT/DE2006/000647
(87) Internationale Veröffentlichungsnummer: WO 2006/108402

(56) Entgegenhaltungen:
- US-B1- 6 238 127

## Beschreibung

Die Erfindung betrifft ein Gleitlagersystem für eine Welle zur Aufnahme axialer und/oder radialer Kräfte von der Welle mit einem Gleitlager (1), das einen hohlzylindrischen Gleitkörper (2) und einen an einer ersten Stirnseite (4) des Gleitkörpers (2) angeordneten, sich radial nach außen erstreckenden ersten Bund (3) aufweist, wobei an der der ersten Stirnseite (4) gegenüber liegenden zweiten Stirnseite (5) des Gleitkörpers (2) ein Kranz (6) von umfänglich beabstandeten Kragenteilen (7) vorgesehen ist, die nach außen zu einem zweiten Bund (8) umgebogen sind, und mit einer Lageraufnahme (11), die einen Lagerkörper (13) mit einer an den Außendurchmesser (da) des Gleitkörpers (2) angepassten Aufnahmeöffnung (14) zur Aufnahme des Gleitlagers (1) aufweist. Die Erfindung betrifft ferner ein Verfahren zur Montage des Gleitlagersystems.

Gattungsgemäße Gleitlagersysteme mit Gleitlager und Lageraufnahme werden beilspielsweise als Massenware im Fahrzeugbau eingesetzt, wobei das Gleitlager zur Aufnahme radial und axial wirkender Kräfte und Momente in einem Presssitz in einer Aufnahmeöffnung der Aufnahme angeordnet ist. Damit das Gleitlager sicher in der Aufnahme sitzt, muss die Aufnahmeöffnung sehr genau mit geringen Toleranzen gearbeitet sein, um eine enge Passung von Gleitlager und Aufnahme zu erzielen. Dies ist insbesondere im Massenbau sehr problematisch, da hier leicht Abweichungen in den Abmessungen von üblichen Blechen auftreten, aus denen die Aufnahme gefertigt ist.

In der US 6,238,127 B1 wird ein Schwenklagersystem zur schwenkfähigen Befestigung verschwenkbarer Bauteile, wie zum Beispiel für eine zurücklehnbare Sitzanordnung, offenbart. Nachteilig ist der aufwändige Aufbau des Schwenklagersystemes. Ferner ist der Sitz des. Gleitlagers in der Lageraufnahme nicht ausreichend fest.

Die der Erfindung zugrunde liegenden Aufgabe lautet daher, ein Gleitlagersystem der eingangs genannten Art bereitzustellen, das einen unaufwändigeren Aufbau aufweist und dessen Gleitlager einen verbesserten festen Sitz in der Lageraufnahme aufweist.

Die gestellte Aufgabe wird erfindungsgemäß dadurch gelöst, dass die Aufnahmeöffnung in zwei zur Anlage der beiden Bünde dienende Seitenflächen des Lagerkörpers einmündet und eine in Aufnahmerichtung vordere Seitenfläche zur Anlage des ersten Bundes und eine in Aufnahmerichtung hintere Seitenfläche zur Anlage des durch die umgebogenen Kragenteile gebildeten zweiten Bundes vorgesehen ist.

Die Kragenteile erstrecken sich somit in einer Aufnahmeposition zungenartig in axialer Richtung von der zweiten Stirnseite des Gleitkörpers, wobei der Außendurchmesser des Kranzes und der Außendurchmesser des Gleitkörpers etwa gleich dem Innendurchmesser einer Aufnahmeöffnung einer Aufnahme zur Aufnahme des Gleitlagers ist. In dieser Aufnahmeposition können die Kragenteile in einer Aufnahmerichtung durch die Aufnahmeöffnung durchgeführt werden, bis der erste Bund zur Anlage an eine in Aufnahmerichtung vordere Seitenfläche der Aufnahme kommt. Anschließend können die Kragenteilen zur Bildung des zweiten Bundes soweit in eine Befestigungsposition umgebogen werden, bis der zweite Bund zur Anlage an einer in Aufnahmerichtung hinteren Seitenfläche kommt. Hierdurch kann das Gleitlager beidseitig durch die beiden Bünde in der Aufnahme gehalten werden, so dass der Presssitz durch in die Aufnahme eingepresstem Gleitkörper nach dem Stand der Technik, welcher enge Maßtoleranzen der Durchmesser von Gleitlager bzw. Gleitkörper und AufnahmeÖffnung verlangt, nicht notwendig ist. Ferner weist das Gleitlager einen im Vergleich zum Lager gemäß der US 6,238,127 B1 einen weniger komplexen Aufbau auf. Hiermit wird ein Gleitlagersystem vorgeschlagen, dass, wie weiter unten detaillierter beschrieben, als Massenware vorgefertigt werden kann.

In einer bevorzugten Weiterbildung kann die Wandstärke der Kragenteile geringer als die des Gleitkörpers sein. Hierdurch sind die Kragenteil leichter umbiegbar. Hierbei kann als Übergang zwischen Gleitkörper und Kranz eine Stufe vorgesehen sein. Bevorzugt sollen die Kragenteile einen Übergangsbereich zu dem Gleitkörper hin aufweisen, in welchem die Wandstärke des Gleitkörpers in die der Kragenteile übergeführt wird. Der Übergangsbereich kann, im Vergleich zur Stufe, unempfindlicher gegenüber Rissbildung beim Umbiegen der Kragenteile ausgebildet sein. Der Übergangsbereich sollte in einer Ausgestaltung eine einfach herstellbare linear verlaufende Querschnittsverjüngung aufweisen. Hierzu kann der Übergangsbereich an seiner radial äußeren Seite eine Schräge aufweisen. Durch diese Maßnahme kann beim Umbiegen der Kragenteile eine Hebelwirkung auftreten, durch die das Gleitlager mit seinem Gleitkörper in die Aufnahmeöffnung weiter hineingezogen wird, so dass der erste Flansch mit seiner zum zweiten Flansch gewandten Seitenfläche gegen eine in Aufnahmerichtung vordere Seitenfläche der Aufnahme gepresst wird. Zudem ist durch die äußere Schräge ein leichteres Einführen des Gleitlagers in die Aufnahmeöffnung möglich. Zur Optimierung dieser Hebelwirkung kann vorgesehen sein, dass der Innendurchmesser des Gleitkörpers gleich dem Innendurchmesser des Kranzes ist.

In einer bevorzugten Weiterbildung erstrecken sich die Kragenteile des Gleitlagers in der Aufnahmeposition in einer radialen Wegkomponente höchstens soweit nach außen, dass sie mit ihren freien Enden radial nicht über den äußeren Umfang des Gleitkörpers hinausragen. Somit können die Kragenteile noch problemlos durch die Aufnahmeöffnung geführt werden. Durch ihre radiale Teilerstreckung können die Kragenteile beispielsweise durch eine flache Andruckfläche, die entgegen der Anfnahmerichtung und parallel zum ersten Bund gegen die freien Enden geführt wird, weiter radial nach außen umgebogen werden, wobei die freien Enden an der Anlagefläche radial nach Außen abgleiten.

vorzugsweise sind die freien Enden mit einer Abschrägung versehen, die in Aufnahmerichtung von Innen nach Außen verläuft. Durch diese Abschrägung wird insbesondere das erste Umbiegen der axialen oder der im wesentlichen axialen Kragenteile erleichtert, indem die Andruckfläche eines Werkzeuges jeweils zuerst an der radial äußeren Kante der freien Enden angreift und infolge einer Hebelwirkung ein Kraftmoment erzeugt, welches radial nach außen wirkt.

Bevorzugt ist das Gleitlager einstückig und bevorzugt als Kunststoffspritzgussteil gefertigt. Hierbei kann sich der Kunststoff wie der eines üblichen Gleitlagers durch Eigenschaften auszeichnen, die an die vorgesehene Verwendung des Gleitlagers angepasst sind. Hierzu zählen beispielsweise Abriebfestigkeit, Temperaturbeständigkeit, Korrosionsbeständigkeit, Schwingungsdämpfung und geringes Gewicht, wodurch ein wartungsfreier Trockenlauf einer Welle in dem Gleitlager möglich ist. Das Gleitlager kann aus mehreren Kunststoffen in einem Mehrkomponentenspritzgussverfahren hergestellt sein. Hierzu kann beispielsweise die Gleitfläche des Gleitkörpers, an der eine gelagerte Welle abgleitet, einen besonders verschleißfesten und temperaturbeständigen Kunststoff sowie die Kragenteile und die die Gleitfläche stützenden Teile des Gleitkörpers einen Kunststoff mit guten Dämpfungseigenschaften aufweisen.

Die hintere Seitenfläche des Lagerkörpers kann als Anlagefläche zur Anlage des Gleitlagersystems an ein Bauteil ausgelegt sein, an das das Gleitlagersystem anbringbar ist. Hierzu kann die Anlagefläche speziell an ein bestimmtes Bauteil angepasst oder, im Sinne einer Massenware, als ebene Fläche ausgebildet sein, die senkrecht zur Längsachse der Aufnahmebohrung verläuft.

In einer bevorzugten Ausbildung des Gleitlagersystems kann die axiale Länge des Gleitkörpers um einen geringen Betrag kleiner als die axiale Länge der Aufnahmeöffnung sein. Damit verbleiben die Kragenteile nach einem Einführen des Gleitlagers in die Aufnahmeöffnung mit einem entsprechend großen Bereich ihres mit dem Gleitkörper verbundenen Endes in der Aufnahmeöffnung. Durch das Umbiegen der Kragenteile zur Ausbildung des zweiten Bundes kann der Gleitkörper in Aufnahmerichtung weiter in die Aufnahmeöffnung hineingezogen werden, wodurch der feste Sitz des Gleitlagers in der Aufnahmeöffnung verstärkt wird. Der Betrag kann etwa der einfachen bis doppelten Wandstärke des Gleitkörpers entsprechen.

Das Gleitlagersystem kann zu seiner Befestigung und/oder Sicherung an dem Bauteil eine vorgesehene Befestigungsvorrichtung aufweisen. Bevorzugt ist der Lagerkörper über die vorgesehene Befestigungsvorrichtung an dem Bauteil befestigbar.

Das Gleitlager kann somit in im Wesentlichen zwei Montageschritten mit der Lageraufnahme zu dem Gleitlagersystem zusammengesetzt werden:
- Nach der Bereitstellung von Gleitlager mit sich axial erstreckenden Kragenteilen und Aufnahmekörper, z.B. aus verschiedenen Spendern, kann das Gleitlager mit seinen Kragenteilen und dem nachfolgenden Gleitkörper durch die Aufnahmeöffnung in Aufnahmerichtung so durchgesteckt werden, dass sein erster Bund mit seiner zum Gleitkörper gewandten Innenseite zur Anlage an der vorderen Seitenwand kommt.
- In einem zweiten Montageschritt können die axialen Kragenteilen zuerst durch ein geeignetes Werkzeug, beispielsweise mittels eines Kegels, der mit seiner Spitze koaxial zum Gleitlager und entgegen der Aufnahmerichtung in den Gleitkörper hinein verfahren wird, radial mit ihren freien Enden umgebogen werden. Anschließend können die Kragenteile mit einem weiteren Werkzeug mit flacher Andruckfläche gegen die hintere Seitenwand gepresst werden, wobei sie bis zur Anlage an der hinteren Seitenwand kommen können. Um die Kragenteile in einem Arbeitsgang bis zur hinteren Seitenfläche umzubiegen, kann das Werkzeug eine flache Andruckfläche mit einer mittigen, bevorzugt zylindrischen Erhebung zum ersten Umbiegen der Kragenteile und/oder zur koaxialen Führung des Werkzeuges in dem hohlzylindrischen Gleitkörper aufweisen. Das zusammengesetzte Gleitlagersystem kann dann mit der hinteren Seitenfläche des Lagerkörpers als Anlagefläche zur Anlage an das Bauteil gebracht und mit diesem über die Befestigungsvorrichtung so fest verbunden werden, dass der aus den umgebogenen Kragenteilen gebildete zweite Bund zwischen Bauteil und Aufnahmekörper wirksam eingeklemmt wird und somit eine Verdreh- und Verschiebesicherheit des Gleitlagers in der Aufnahme gewährleistet. Durch das Umbiegen und anschließende Einklemmen können die Kragenteile den Gleitkörper und den ersten Bund weiter in die Aufnahmeöffnung hineinziehen bzw. gegen die in Aufnahmerichtung vordere Seitenfläche der Aufnahme pressen, so dass der Presssitz weiter verstärkt werden kann.
   Diese einfache Montage eignet sich gut zur Herstellung von Massenteilen. Die Gleitlagersysteme können zum Beispiel an einem Ort vorgefertigt und an einem anderen Ort eingesetzt werden können.
   Die Befestigungsvorrichtung kann mindestens eine im Lagerkörper eingebrachte Befestigungsöffnung für eine Schraub- oder Nietverbindung mit dem Bauteil aufweisen. Im Bauteil können als Massenteil eine Reihe von entsprechenden Befestigungsöffnungen vorgesehen sein, die dann entsprechend einer vorgesehen Positionierung des Gleitlagersystems in dem Bauteil zu dessen Befestigung genutzt werden können. Bevorzugt verläuft die Längsachse der Befestigungsöffnung parallel zur Längsachse der Aufnahmeöffnung und senkrecht zur Anlagefläche. Damit verläuft die Längsachse in Richtung des Anpressdruckes, mit dem der Anlagekörper gegen das Bauteil gepresst wird. Der Lagerkörper an sich kann bevorzugt aus einem Blech gefertigt sein.
   In einer zweckmäßigen Weiterbildung können zwei Befestigungsöffnungen vorgesehen sein, die auf einem Umkreis um die Aufnahmeöffnung und einander gegenüber liegend angeordnet sind.
   Zweekmäßigerweise kann ein aus Blech gefertigter Aufnahmekörper einen rautenförmigen Umriss mit zwei unterschiedlich langen Diagonalen aufweisen, wobei die Befestigungsöffnungen in den Ecken angeordnet sein sollen, in die die längere Diagonale weist, und die Aufnahmeöffnung mittig im Kreuzungspunkt beider Diagonalen angeordnet sein soll. Es kann auch zusätzlich zu einer Schraub- oder Nietverbindung eine Steckverbindung zur Aufnahme radialer Kräfte vorgesehen sein.
   Andere Ausführungsformen können auch eine Anordnung von drei oder mehr Befestigungsöffnungen aufweisen, die bevorzugt symmetrisch in gleichem Mittelpunktswinkelabstand auf dem Umkreis angeordnet sind.
   In einer anderen Befestigungsform des Gleitlagersystems, die insbesondere dann, wenn höhere Radialbelastungen auftreten, zweckmäßig erscheint, kann vorgesehen sein, dass die in dem Gleitlagersystem gelagerte Welle zusätzlich durch eine Bohrung in dem Bauteil geführt wird, welche in einer Befestigungsposition fluchtend zur Aufnahmeöffnung angeordnet ist. Für diese Bohrungen sind dann ebenfalls größere Toleranzen zulässig. In dieser Form kann das Gleitlager als Linearlager dienen.
   Das Gleitlagersystem gemäß einer der zuvor beschriebenen Ausbildungsformen mit einem Gleitlager gemäß einer der zuvor beschriebenen Ausbildungsformen kann montiert werden. Das Verfahren zur Montage des Gleitlagers für eine Welle zur Aufnahme axialer und/oder radialer Kräfte von der Welle in einer Lageraufnahme, wobei das Gleitlager (1) einen hohlzylindrischen Gleitkörper (2) und einen an einer ersten Stirnseite (4) des Gleitkörpers (2) angeordneten, sich radial nach außen erstreckenden ersten Bund (3) und einen an der der ersten Stirnseite (4) gegenüber liegenden zweiten Stirnseite (5) des Gleitkörpers (2) angeordneten Kranz (6) von umfänglich beabstandeten, sich axial erstreckenden Kragenteilen (7) aufweist, die nach außen zu einem zweiten Bund (8) umgebiegbar sind, und die Lageraufnahme (11) einen Lagerkörper (13) mit einer an den Außendurchmesser (da) des Gleitkörpers (2) angepassten Aufnahmeöffnung (14) zur Aufnahme des Gleitlagers (1) aufweist, kann folgenden Verfahrensschritte aufweisen:
   - Bereitstellen des Gleitlagers (1) und der Lageraufnahme (11),
   - Durchstecken des Gleitlagers (1) mit seinen Kragenteile (7) und dem nachfolgenden Gleitkörper (2) durch die Aufnahmeöffnung (14), so dass sein erster Bund (3) mit seiner zum Gleitkörper (2) gewandten Innenseite zur Anlage an einer in Aufnahmerichtung (a) vorderen Seitenfläche (15) des Lagerkörpers (13) kommt,
   - Umbiegen der axialen Kragenteile (7) mit ihren freien Enden in radiale Richtung mittels eines Werkzeuges, so dass die Kragenteile mit ihren zum Gleitkörper (2) gewandten Innenseiten zur Anlage an eine in Aufnahmerichtung (a) hintere Seitenfläche (16) des Lagerkörpers (13) kommen,
   - Entfernen des Werkzeuges

Das Umbiegen der axialen Kragenteile kann in zwei Verfahrensschritten erfolgt, indem die Kragenteile in einem ersten Schritt mittels eines geeigneten Werkzeuges, beispielsweise eines Kegels, das mit einer Spitze koaxial zum Gleitlager (2) und entgegen der Aufnahmerichtung (a) in den Gleitkörper (2) hinein verfahren wird, in radiale Richtung umgebogen und in einem zweiten Schritt mittels eines weiteren Werkzeuges mit flacher Andruckfläche gegen die hintere Seitenwand gepresst werden.

Bevorzugt erfolgt das Umbiegen der Kragenteile in radiale Richtung bis zur hinteren Seitenfläche hin in einem Arbeitsgang. Zum Umbiegen der Kragenteile kann ein Werkzeug vorgesehen sein, das mit einem ersten Element in Arbeitsposition an dem ersten Bund anliegt und das zum Umbiegen der Kragenteile mit einem zweiten Element entgegen der Aufnahmerichtung gegen die hintere Seitenfläche des Lagerkörpers geführt wird.

Hierbei kann das Werkzeug als zweites Element eine flache Andruckfläche mit einer mittigen, bevorzugt zylindrischen Erhebung zum ersten Umbiegen der Kragenteile und/oder zur koaxialen Führung des Werkzeuges in dem hohlzylindrischen Gleitkörper aufweisen und mit seiner mittige Erhebung koaxial zum Gleitlager und entgegen der Aufnahmerichtung in den Gleitkörper hinein verfahren werden. Als erstes Element kann ein Andruckelement, insbesondere ein Andruckstempel dienen, das gegen den ersten Bund angedrückt wird.

Erstrecken sich die Kragenteile, wie oben beschrieben, im nicht umgebogenen Zustand mit einer radialen Wegkomponente höchstens so weit nach außen, dass sie radial bis zu dem äußeren Umfang des Gleitkörpers heranragen, so kann das Umbiegen in einem Verfahrensschritt auch mittels eines Werkzeuges erfolgen, dass eine flache Andruckfläche zum Umbiegen der Kragenteile aufweist. Hierzu kann die Andruckfläche parallel zu der Anlagefläche und entgegen der Aufnahmerichtung gegen die freien Enden der durch die Lageraufnahme geführten Kragenteile geführt werden und über die die Kragenteile mit ihren freien Enden radial nach außen abgleitend umgebogen werden können. Das Umbiegen kann bis zur Anlage der Kragenteile an der hinteren Seitenfläche erfolgen.

Das Werkzeug kann in einer bevorzugten Ausbildung als erstes Element eine Schraube mit einem Schraubenkopf, einem Schraubenschaft, der einen dem Schraubenkopf näheren glatten ersten Abschnitt sowie einen sich daran bevorzugt bis zum freien Ende anschließenden und mit einem Außengewinde versehenen zweiten Abschnitt umfasst, und als zweites Element eine Andruckfläche mit einer senkrecht in die eingebrachte Gewindebohrung zum Eingriff des zweiten Abschnittes aufweisen. Das Umbiegen der Kragenteile kann in folgenden Verfahrensschritten erfogen:
- Axiales Einführen des Schraubenschaftes in Aufnahmerichtung in und durch den Gleitkörper bis zur Anlage der Unterseite des Schraubenkopfes an den ersten Bund,
- Eingreifen des zweiten Abschnittes in die Gewindebohrung
- Fortschreitendes Verschrauben und damit Verfahren der Andruckfläche durch Schrauben entgegen der Aufnahmerichtung (a) gegen die hintere Seitenfläche (16) des Lagerkörpers (13) unter gleichzeitigem Umbiegen der Kragenteile zur Ausbildung des zweiten Bundes.

Zum Umbiegen der Kragenteile kann die Schraube mit ihrem Schaft durch die Aufnahmeöffnung ragend so angeordnet werden, dass sie mit der Unterseite ihres Kopfes an dem ersten Bund anliegt, mit ihrem glatten Abschnitt in der Aufnahmeöffnung angeordnet ist, bevorzugt innenseitig an dem Gleitkörper verschieblich anliegt, sich mit ihrem Außengewinde aus der Aufnahmeöffnung heraus erstreckt und in Eingriff mit dem Innengewinde gebracht werden kann. Zum Umbiegen der Kragenteile kann die Andruckfläche über die Drehung der Schraube gegen die freien Enden der Kragenteile und weiter unter Umbiegung der Kragenteile soweit verfahren werden, bis die Kragenteile zur Anlage an die hintere Seitenfläche kommen und den zweiten Bund bilden.

Der äußere Durchmesser des Schraubenkopfes kann mindestens so groß wie der Außendurchmesser des ersten Bundes sein, um eine notwendige Andrückkraft über den gesamten ersten Bund einleiten zu können. Bevorzugt ist die Gewindebohrung mittig in die Anduckfläche eingebracht.

Der Außendurchmesser des zweiten Abschnittes ist bevorzugt geringer als der des ersten Abschnittes. Dadurch kann die Andruckfläche zum Umbiegen der Kragenteile die freien Enden der Kragenteile radial nach innen überragend an denselben angreifen und somit ein leichteres und sicheres Umbiegen der Kragenteile ermöglichen.

Das zusammengesetzte Gleitlagersystem mit der hinteren Seitenfläche des Lagerkörpers kann als Anlagefläche zur Anlage an ein Bauteil gebracht werden und mit diesem über eine Befestigungsvorrichtung so fest verbunden werden, dass der aus den umgebogenen Kragenteilen gebildete zweite Bund zwischen Bauteil und Aufnahmekörper wirksam eingeklemmt wird.

Durch das Umbiegen und anschließende Einklemmen die Kragenteile können der Gleitkörper und der erste Bund weiter in die Aufnahmeöffnung hineingezogen werden und kann der erste Bund gegen vordere Seitenfläche der Lageraufnahme gepresst werden.

Bei der Verwendung des oben beschriebenen Werkzeuges mit Schraube und Anlagedruck kann als Anlagedruckfläche die zur Anlage des Gleitlagersystems vorgesehene Seitenfläche des Bauteiles dienen, in welche die Gewindebohrung mit Innengewinde für die Schraube eingebracht ist. Dadurch kann das Gleitlagersystem in einem ersten Schritt unter gleichzeitiger Ausbildung des zweiten Bundes gegen das Werkstück verschraubt werden. In einem nachfolgenden Schritt kann das Gleitlagersystem über seine vorgesehene Befestigungsvorrichtung mit dem Bauteil verbunden werden. Schließlich kann die Schraube von dem Werkstück gelöst und aus dem Gleitlagersystem entfernt werden.

Ist, wie oben beschrieben, zusätzlich eine in Befestigungsposition zur Aufnahmeöffnung fluchtende Bohrung in dem Bauteil angeordnet, so kann anstatt des Schraubenkopfes ein Gewindeschaft mit einer darauf eingreifenden Schraubenmutter und der zweite Abschnitt anstatt des Gewindes oder zusätzlich eine lösbare radiale Spreizbarkeit zumindest des zweiten Abschnittes vorgesehen sein, durch die sich der zweite Abschnitt in der Befestigungsposition an der Innenseite der Bohrung festsetzen und somit ein Widerlager für ein Anziehen des Schraubenmutter gegen den ersten Bund bilden kann.

Die Erfindung wird nachfolgend anhand eines Ausführungsbeispieles mit einer zugehörigen Zeichnung näher erläutert. In der Zeichnung zeigen:
- Fig.1: perspektivische Ansicht einer ersten Ausführungsform eines Gleitlagers,
- Fig. 2: eine Aufsicht auf das Gleitlager,
- Fig. 3: eine Längsschnittansicht des Gleitlagers,
- Fig. 4 a bis 4 c: in einer Längsschnittdarstellung einen Zusammenbau des Gleitlagers gemäß Figur 1 mit einer Lageraufnahme zu einem Gleitlagersystem mit Hilfe eines Werkzeuges,
- Fig. 5: eine Längsschnittansicht einer zweiten Ausführungsform des Gleitlagers und
- Fig. 6: a bis 6 c in einer Längsschnittdarstellung einen Zusammenbau des Gleitlagers gemäß Figur 5 mit einer Lageraufnahme zu einem Gleitlagersystem mit Hilfe eines Werkzeuges,

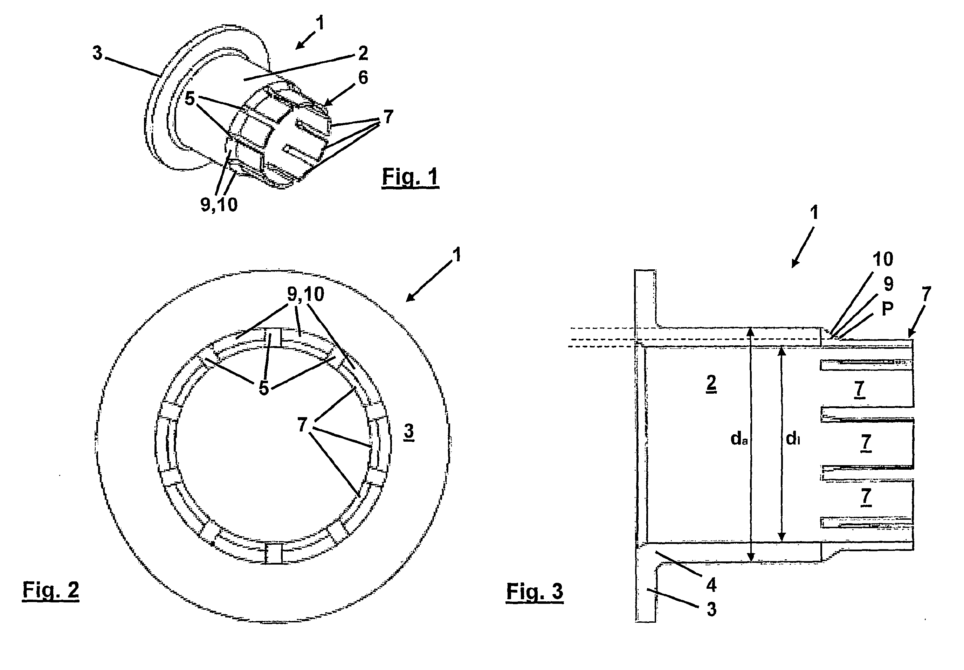

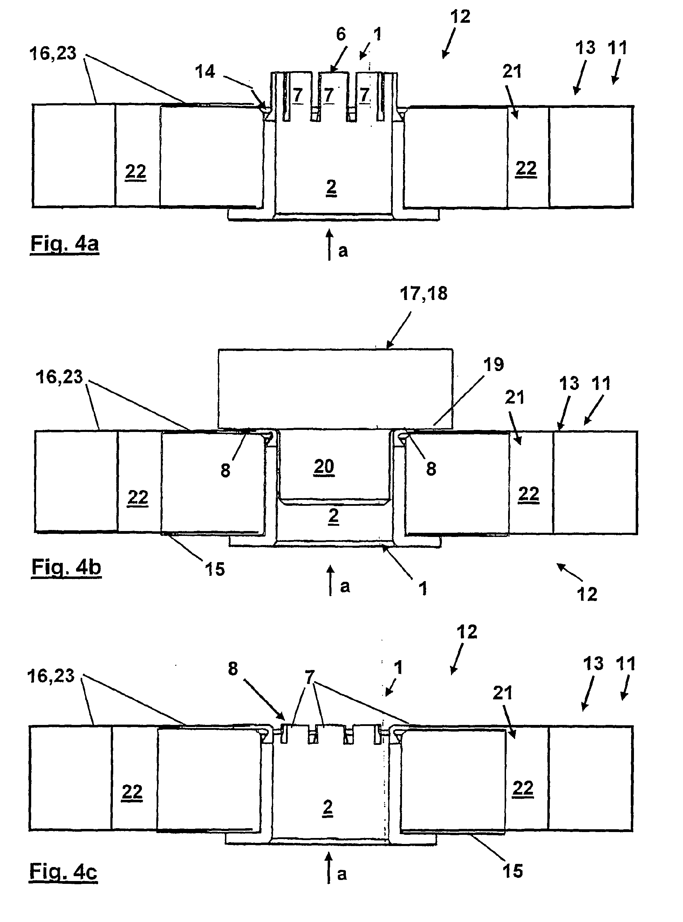

In den Figuren 1 bis 3 wird ein Gleitlager 1 in einer ersten Ausführungsform mit einem hohlzylindrischen Gleitkörper 2 und einem ersten Bund 3 dargestellt, der an einer ersten Stirnseite 4 des Gleitkörpers 2 angeordnet ist und sich radial nach außen erstreckt. An einer der ersten Stirnseite 4 gegenüberliegenden zweiten Stirnseite 5 des Gleitkörpers 2 ist ein Kranz 6 von sich axial erstreckenden umfänglich beabstandeten Kragenteilen 7 vorgesehen. Die Kragenteile 7 sind, wie in den Figuren 4a bis 4c demonstriert, nach außen zu einem in den Figuren 4b und c gezeigten zweiten Bund 8 umbiegbar.

Wie insbesondere in den Figuren 1 und 3 ersichtlich, ist die Wandstärke der Kragenteile 7 geringer als die des Gleitkörpers 2 und des ersten Bundes 3. Der Innendurchmesser dᵢ des Gleitkörpers 2 ist gleich dem Innendurchmesser dᵢ des Kranzes 6. Ferner gehen die Kragenteile 7 in einem Übergangsbereich 9 in den Gleitkörper 2 über, welcher eine lineare Querschnittsverjüngung in Form einer Schräge 10 an seiner radial äußeren Seitenfläche aufweist. Dadurch ist die Möglichkeit gegeben, dass der Gleitkörper 2, wie weiter unten noch detaillierter gezeigt, mit dem ersten Bund 3 durch Umbiegen der Kragenteile 7 zu dem in Figur 4b und c gezeigten zweiten Bund 8 stärker in eine in den Figuren 4a bis 4c gezeigten Lageraufnahme 11 hineingezogen werden kann.

Die Kragenteile 7 sind in diesem Ausführungsbeispiel über den Umfang gleichmäßig beabstandet angeordnet. Hier sind zehn Kragenteile 7 vorgesehen, die einstückig an der zweiten Seite angeformt sind. Die stirnseitige Öffnung des Gleitkörpers 2 ist zur ersten Stirnseite 4 hin abgerundet.

Die Figuren 4a bis 4c zeigen ein Gleitlagersystem 12 mit dem in Figuren 1 bis 3 gezeigten Gleitlager 1 und der Lageraufnahme 11, die einen Lagerkörper 13 mit einer an den Außendurchmesser dₐ des Gleitkörpers 2 angepassten Aufnahmeöffnung 14 aufweist.

Die Aufnahmeöffnung 14 mündet in zwei zur Anlage der beiden Bünde 2, 8 dienenden Seitenflächen des Lagerkörpers 13 ein, eine in Aufnahmerichtung a vordere Seitenfläche 15 zur Anlage des ersten Bundes 3 und eine in Ausnahmerichtung a hintere Seitenfläche 16 zur Anlage des durch die umgebogenen Kragenteile 7 gebildeten zweiten Bundes 8.

Die Figuren 4a bis 4c zeigen den Zusammenbau des Gleitlagersystems 12 in bestimmten Arbeitsphasen. In Figur 4a ist das Gleitlager 1 in Aufnahmerichtung a in die Aufnahmeöffnung 14 soweit eingeführt, dass der erste Bund 3 an die vordere Seitenfläche 15 anliegt.

In Figur 4b ist ein Werkzeug 17 in Form eines Druckstempels 18 dargestellt, der eine Andruckfläche 19 und einen stirnseitigen, an den Innendurchmesser des Gleitkörpers 2 angepassten, zylindrischen Fortsatz 20 zur koaxialen Führung des Werkzeuges 17 in dem Gleitlager 1 aufweist. Hierbei ist in Figur 4b der Zustand des Gleitlagersystems 12 gezeigt, in dem der Druckstempel 18 die Kragenteile 7 durch seine Andruckfläche 19 bereits zu dem zweiten Bund 8 umgebogen hat.

Den Figuren 4a bis c ist deutlich entnehmbar, dass der Gleitkörper 2 mit Einführung des Gleitlagers 1 in die Aufnahmeöffnung 14 nicht mit seiner zweiten Stirnseite 5 an die hintere Seitenfläche 16 heranreicht, so dass der mit dem Gleitkörper 2 verbundener Endbereich mit dem Übergangsbereich 9 der Kragenteile 7 in der Aufnahmeöffnung 14 verbleibt. Mit Umbiegen der Kragenteile 7 wird durch den verminderten Querschnitt der Kragenteile 7 gegenüber dem des Gleitkörpers 2 und das Verbleiben des Endbereiches der Kragenteile 7 in der Aufnahmeöffnung 14 das Gleitlager 1 weiter in Aufnahmerichtung a in die Aufnahmeöffnung 14 hineingezogen. Hierdurch wird der erste Bund 3 stärker gegen die vordere Seitenfläche 15 der Lageraufnahme 11 gezogen. Somit wird der Presssitz des Gleitlagers 1 in der Lageraufnahme 11 insgesamt verstärkt und die Verdrehfestigkeit des Gleitlagers 1 in der Lageraufnahme 11 erhöht.

Das Gleitlagersystem 12 ist zudem mit einer Befestigungsvorrichtung 21 zu seiner Befestigung an ein hier nicht dargestelltes Bauteil versehen. Die Befestigungsvorrichtung 21 weist zwei in den Lagerkörper 13 eingebrachte Befestigungsöffnungen 22 auf, die parallel zur Aufnahmeöffnung 14 verlaufen und durch die zur Befestigung des Gleitlagersystems 12 an dem Bauteil ein Verbindungselement, wie zum Beispiel eine Schraube oder Niete, führbar ist. Die Befestigungsöffnungen 23 sind beidseitig der Aufnahmeöffnung 14, einander gegenüberliegend und in einer Linie mit der Aufnahmeöffnung 14 angeordnet.

Zur Befestigung des Gleitlagersystems 12 an dem hier nicht dargestellte Bauteil ist vorgesehen, dass das Gleitlagersystem 12 in Aufnahmerichtung a mit seiner als Anlagefläche 23 ausgebildeten hinteren Seitenflächen 16 des Lagerkörpers 2 gegen das Bauteil bringbar und mit diesem über die Befestigungsvorrichtung 21 fest verbindbar ist. Hierdurch wird der aus den umgebogenen Kragenteilen 7 gebildete zweite Bund 8 zwischen Bauteil und Anlagefläche 21 wirksam eingeklemmt, so dass die Verdrehund Verschiebesicherheit des Gleitlagers 1 in der Lageraufnahme 11 wesentlich gesteigert wird.

Das Gleitlagersystem 12 kann somit als Massenteil vorgefertigt und an einer vorbereiteten Stelle des Bauteiles befestigt werden. Hierzu kann das Bauteil beispielsweise eine Reihe von Öffnungen zur Herstellung einer Schraubverbindung mit den Gleitlagersystem 12 aufweisen, die je nach erwünschter Positionierung des Gleitlagersystems an dem Bauteil, ausgewählt werden können. Somit eignet sich das vorgestellte Gleitlagersystem 12 als Massenteil, das an ein ebenfalls als Massenteil ausgelegtes Bauteil mit einer bestimmten Anzahl von vorgefertigten Öffnungen oder dergleichen zur wahlweisen Befestigung des Gleitlagersystems 12 befestigbar ist.

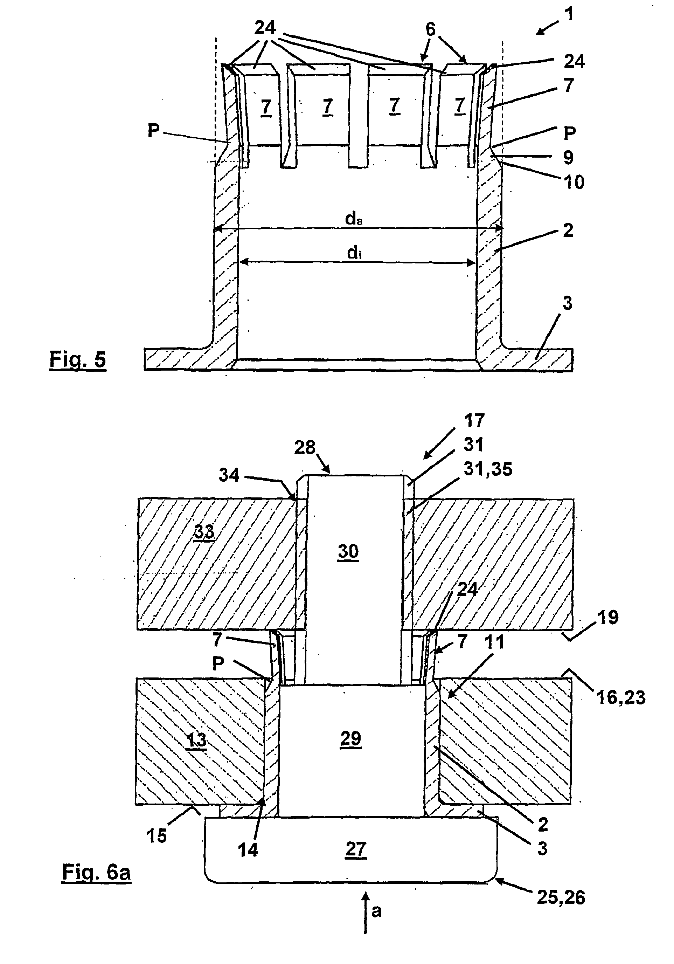

In der Figur 5 ist eine Längsschnittansicht des Gleitlagers 1 in einer zweiten Ausführungsform gezeigt. Diese unterscheidet sich von der ersten Ausführungsform des Gleitlagers 1 in der Ausbildung der Kragenteile 7. Die Kragenteile 7 erstrecken sich zu ihren freien Enden hin in einer axialen Wegkomponente nach außen, so dass sich der von ihnen eingeschlossene Innenraum in Aufnahmerichtung a konisch erweitert. Dies ist in der Figur 5 durch die gestrichelte Linie verdeutlicht, die das Maß des äußeren Durchmessers dₐ des Gleitkörpers 2 weiterführt und zu der sich das hier geschnittene Kragenteil 7 annähert. Ferner ist an ihren freien Enden jeweils eine Abschrägung 24 vorgesehen, die in Aufnahmerichtung a bzw. in Richtung von dem Gleitkörper 2 zu den freien Enden hin von innen nach außen verläuft. Beide Maßnahmen bewirken, wie weiter unten gezeigt, dass die Kragenteile 7 mit ihren freien Enden leichter und sicherer in radialer Richtung umgebogen oder in einem Fußpunkt P abgeknickt werden können. Der Fußpunkt P markiert den Beginn der verminderten Wandstärke des Gleitlagers 1 zu den Kragenteilen 7 hin.

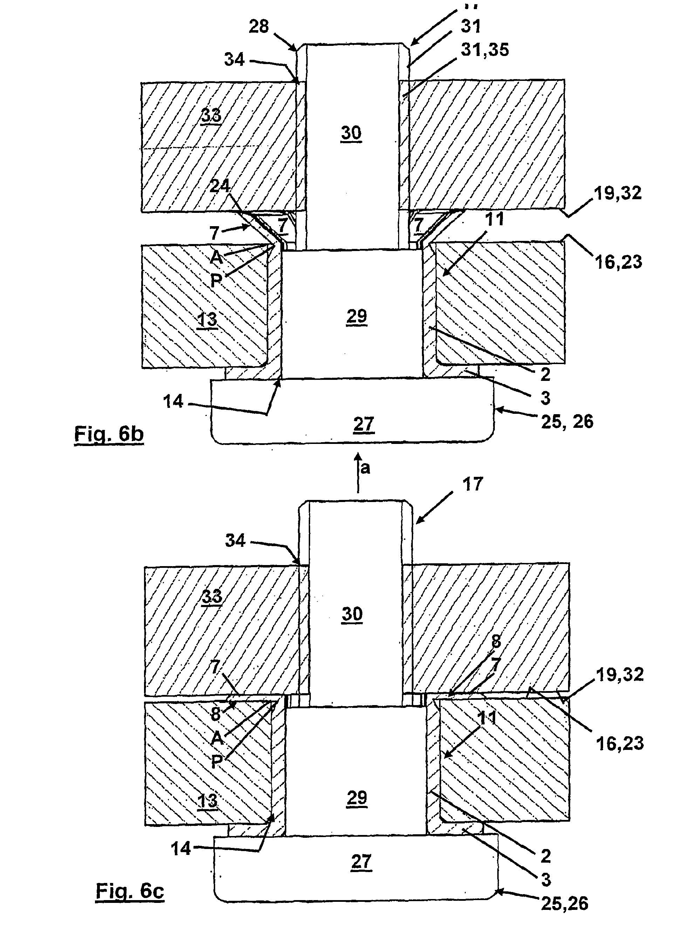

In den Figuren 6a bis 6c wird der Vorgang des Umbiegens der Kragenteile 7 in drei Schritten gezeigt. Das hierzu verwendete Werkzeug 17 unterscheidet sich von dem in den Figuren 4a bis c gezeigten grundlegend, hat aber wie das in den Figuren 4a bis c gezeigtem Werkzeug 17 die Funktion, die Kragenteile 7 so umzubiegen, dass sie in den zweiten Bund 8 (Figur 6c) bilden. Das Werkzeug 17 weist als erstes Element 25 eine Schraube 26 mit einem Schraubenkopf 27 und einem Schraubenschaft 28 auf. Der Schraubenschaft 28 umfasst einen an den Schraubenkopf 27 anschließenden ersten Abschnitt 29, der eine ebene Oberfläche aufweist, und in seinem freien Endbereich einen zweiten Abschnitt 30 mit einem Außengewinde 31. Als zweites Element 32 des Werkzeuges 17 ist ein plattenförmiges Bauelement 33 mit der Andruckfläche 19 vorgesehen. Senkrecht zu der Andruckfläche 19 ist eine Gewindebohrung 34 in das Bauelement 33 eingebracht, in die der zweite Abschnitt 30 eingreift und mit seinem Außengewinde 31 das Innengewinde 35 der Gewindebohrung 34 kämmt.

In der Figur 6a ist der Schraubenschaft 28 in Aufnahmerichtung a axial so weit durch den Gleitkörper 2 geführt, dass der Schraubenkopf 27 mit seiner Unterseite an dem ersten Bund 3 flächig anliegt und diese während des Umbiegevorgangs gegen die vordere Seitenfläche 15 drückt. Der erste Abschnitt 29 der Schraube 26 liegt innenseitig an dem Gleitkörper 2 an und stabilisiert diesen während des nachfolgenden Umbiegens der Kragenteile 7. Der zweite Abschnitt 30 erstreckt sich in Aufnahmerichtung a aus dem Gleitkörper 2 heraus. Der Durchmesser des ersten Abschnittes entspricht dem Innendurchmesser dᵢ des Gleitkörpers 2, während der Durchmesser des zweiten Abschnittes 30 wesentlich kleiner ausgelegt ist. Hierdurch ist die Andruckfläche 19 des Bauelementes 23 radial nach Innen vergrößert, so dass die Kragenteile 7 mit ihren freien Enden sicher in einem Bereich der Andruckfläche 19 angreifen, der beabstandet von einem radialen Innenrand der Andruckfläche 19 ist. Der zweite Abschnitt 30 steht in dem Gewindeeingriff mit der Gewindebohrung 34 des Bauelementes 33. Hierbei ist das Bauelement 33 bereits so weit auf den zweiten Abschnitt 30 aufgeschraubt, dass es mit seiner Andruckfläche 19 die freien Enden der Kragenweite 7 berührt. Somit wird in Figur 6a der Zeitpunkt bevor dem Beginn des Umbiegens der Kragenteile 7 dargestellt. Wie bereits oben erwähnt, öffnet sich der Kranz aus den noch nicht umgebogenen Kragenteilen 7 in Aufnahmerichtung leicht konisch.

Mit fortschreitender Schraubbewegung nähert sich die Andruckfläche 19 der hinteren Seitenfläche 16 des Lagerkörpers 13, wobei die Kragenteile 7 mit ihren freien Enden an der Andruckfläche 19 radial nach außen abgleiten und radial nach außen umgebogen werden. Hierbei knicken die Kragenteile 7 an dem Punkt P ab, an dem der Übergangsbereich 9 zu den Kragenteilen 7 endet. Dieser Punkt P liegt noch in der Aufnahmeöffnung 17 des Lagerkörpers 13, so dass die Kragenteile 7 mit weiterem Fortschreiten ihres Umbiegens bzw. Abknickens in einem Anlagepunkt A seitlich an der Kante der Aufnahmeöffnung 14 zur Anlage kommen.

Hierdurch bildet sich ein Hebel mit einem kleineren Hebelarm A - B und einem größeren Hebelarm A - Anlagepunkt des freien Endes der Kragenteile 7 an der Andruckfläche 19 aus. Mit Aufliegen der Kragenteile 7. in dem jeweiligen Punkt A und weiterem Umbiegen der Kragenteile 7 durch ein weiteres Vorrücken der Andruckfläche 19 entgegen der Aufnahmerichtung a werden der Gleitkörper 2 durch die Hebelkraft weiter in Aufnahmerichtung a in die Aufnahmeöffnung 14 hinein gezogen und der erste Bund 3 stärker gegen die vordere Seitenfläche 15 der Lageraufnahme 11 gezogen. Dadurch wird der Presssitz des Gleitlagers in der Lageraufnahme 11 verstärkt, welches die Funktionstüchtigkeit des Gleitlagersystems 1 erhöht.

Die Figur 6c zeigt den Endpunkt des Umbiegevorganges der Kragenteile 7, in dem die Kragenteile 7 zu dem zweiten Bund 8 umgebogen sind und an der hinteren Seitenfläche 16 des Lagerkörpers 13 anliegen. Damit ist das Gleitlager 1 in einem Arbeitsvorgang im Presssitz in der Lageraufnahme 11 gebracht worden. Anschließend wird das Werkzeug 17 durch Aufschrauben entfernt.

Hiernach wird das Gleitlagersystem 12, wie hier nicht mehr dargestellt, über eine Befestigungsvorrichtung an ein hier nicht dargestelltes Bauteil so befestigt, das der zweite Bund zwischen Bauteil und Anlagefläche eingeklemmt wird, welches die Lagestabilität und damit die Funktionstüchtigkeit des Gleitlagers 1 in der Lageraufnahme weiter verbessert.

### Bezugszeichenliste

- 1: Gleitlager
- 2: Gleitkörper
- 3: erster Bund
- 4: erste Stirnseite
- 5: zweite Stirnseite
- 6: Kranz
- 7: Kragenteil
- 8: zweiter Bund
- 9: Übergangsbereich
- 10: Schräge
- 11: Lageraufnahme
- 12: Gleitlagersystem
- 13: Lagerkörper
- 14: Aufnahmeöffnung
- 15: vordere Seitenfläche
- 16: hintere Seitenfläche
- 17: Werkzeug
- 18: Druckstempel
- 19: Andruckfläche
- 20: Fortsatz
- 21: Befestigungsvorrichtung
- 22: Befestigungsöffnung
- 23: Anlagefläche
- 24: Abschrägung
- 25: erstes Element
- 26: Schraube
- 27: Schraubenkopf
- 28: Schraubenschaft
- 29: erster Abschnitt
- 30: zweiter Abschnitt
- 31: Außengewinde
- 32: zweites Element
- 33: Bauelement
- 34: Gewindebohrung
- 35: Innengewinde
- a: Aufnahmerichtung
- dₐ: Außendurchmesser
- dᵢ: Innendurchmesser
- P: Punkt
- A: Anlagepunkt

## Patentansprüche

1. Gleitlagersystem für eine Welle zur Aufnahme axialer und/oder radialer Kräfte von der Welle mit einem Gleitlager (1), das einen hohlzylindrischen Gleitkörper (2) und einen an einer ersten Stirnseite (4) des Gleitkörpers (2) angeordneten, sich radial nach außen erstreckenden ersten Bund (3) aufweist, wobei an der der ersten Stirnseite (4) gegenüber liegenden zweiten Stirnseite (5) des Gleitkörpers (2) ein Kranz (6) von umfänglich beabstandeten Kragenteilen (7) vorgesehen ist, die nach außen zu einem zweiten Bund (8) umgebogen sind, und mit einer Lageraufnahme (11), die einen Lagerkörper (13) mit einer an den Außendurchmesser (da) des Gleitkörpers (2) angepassten Aufnahmeöffnung (14) zur Aufnahme des Gleitlagers (1) aufweist, **dadurch gekennzeichnet, dass** die Aufnahmeöffnung (14) in zwei zur Anlage der beiden Bünde (3, 8) dienende Seitenflächen (15, 16) des Lagerkörpers (13) einmündet und eine in Aufnahmerichtung (a) vordere Seitenfläche (15) zur Anlage des ersten Bundes (3) und eine in Aufnahmerichtung (a) hintere Seitenfläche (16) zur Anlage des durch die umgebogenen Kragenteile (7) gebildeten zweiten Bundes (8) vorgesehen ist.

2. Gleitlagersystem nach Anspruch 1, **dadurch gekennzeichnet, dass** die axiale Länge des Gleitkörpers (2) um einen geringen Betrag kleiner als die axiale Länge der Aufnahmeöffnung (14) ist.

3. Gleitlagersystem nach Anspruch 2 oder 3, **dadurch gekennzeichnet, dass** die Wandstärke der Kragenteile (7) geringer als die des Gleitkörpers (2) ist.

4. Gleitlagersystem nach einem der Ansprüche 1 bis 3, **dadurch gekennzeichnet, dass** der Innendurchmesser (dᵢ) des Gleitkörpers (2) gleich dem Innendurchmesser (dᵢ) des Kranzes (6) ist.

5. Gleitlagersystem nach einem der Ansprüche 1 bis 4, **dadurch gekennzeichnet, dass** sich die Kragenteile (7) zu ihren freien Enden hin in einer axialen Wegkomponente höchstens soweit nach außen erstrecken, dass sie bis an den äußeren Durchmesser (da) des Gleitkörpers (2) heranragen.

6. Gleitlagersystem nach einem der Ansprüche 1 bis 5, **dadurch gekennzeichnet, dass** die Kragenteile (7) an ihren freien Enden eine Abschrägung (24) aufweisen, die in Richtung von dem Gleitkörper (2) zu den freien Enden hin von innen nach außen verläuft.

7. Gleitlagersystem nach einem der Ansprüche 1 bis 6, **gekennzeichnet durch** eine Ausbildung als einstückiges Spritzgussteil.

8. Gleitlagersystem nach einem der Ansprüche 1 bis 7, **dadurch gekennzeichnet, dass** die hintere Seitenfläche (16) des Lagerkörpers (13) als Anlagefläche (23) zur Anlage des Gleitlagersystems (12) an ein Bauteil ausgelegt ist, an das das Gleitlagersystem (12) anbringbar ist.

9. Gleitlagersystem nach einem der Ansprüche 1 bis 8, **gekennzeichnet durch** eine vorgesehene Befestigungsvorrichtung (21) zur Befestigung des Gleitlagersystems (12) mit seiner Anlagefläche (23) an das Bauteil.

10. Verfahren zur Montage eines Gleitlagers (1) für eine Welle zur "Aufnahme axialer und/oder radialer Kräfte von der Welle in einer Lageraufnahme (11), wobei das Gleitlager (1) einen hohlzylindrischen Gleitkörper (2) und einen an einer ersten Stirnseite (4) des Gleitkörpers (2) angeordneten, sich radial nach außen erstreckenden ersten Bund (3) und einen an der der ersten Stirnseite (4) gegenüber liegenden zweiten Stirnseite (5) des Gleitkörpers (2) angeordneten Kranz (6) von umfänglich beabstandeten, sich axial erstreckenden Kragenteilen (7) aufweist, die nach außen zu einem zweien Bund (8) umbiegbar sind, und die Lageraufnahme (11) einen Lagerkörper (13) mit einer an den Außendurchmesser (da) des Gleitkörpers (2) angepassten Aufnahmeöffnung (14) zur Aufnahme des Gleitlagers (1) aufweist, mit folgenden Verfahrensschritten:
- Bereitstellen des Gleitlagers (1) und der Lageraufnahme (11),
- Durchstecken des Gleitlagers (1) mit seinen Kragenteilen (7) und dem nachfolgenden Gleitkörper (2) durch die Aufnahmeöffnung (14), so dass sein erster Bund (3) mit seiner zum Gleitkörper (2) gewandten Innenseite zur Anlage an einer in Aufnahmerichtung (a) vorderen Seitenfläche (15) des Lagerkörpers (13) kommt,
- Umbiegen der axialen Kragenteil (7) mit ihren freien Enden in radiale Richtung mittels eines Werkzeuges, so dass die Kragenteile mit ihren zum Gleitkörper (2) gewandten Innenseiten zur Anlage an eine in Aufnahmerichtung (a) hintere Seitenfläche (16) des Lagerkörpers (13) kommen,
- Entfernen des Werkzeuges

11. Verfahren nach Anspruch 10, wobei das Umbiegen der Kragenteile (7) in radiale Richtung bis zur hinteren Seitenfläche (16) hin in einem Arbeitsgang erfolgt und wobei das Werkzeug (17) mit einem ersten Element (25) in Arbeitsposition an dem ersten Bund (3) anliegt und das zum Umbiegen der Kragenteile (7) mit einem zweiten Element (32) entgegen der Aufnahmerichtung (a) gegen die hintere Seitenfläche (16) des Lagerkörpers (13) geführt wird.

12. Verfahren nach Anspruch 11, wobei das Werkzeug (17) als erstes Element (25) eine Schraube (26) mit einem Schraubenkopf (27), einem Schraubenschaft (28), der einen dem Schraubenkopf (27) näheren glatten ersten Abschnitt (29) sowie einem sich daran bevorzugt bis zum freien Ende anschließenden und mit einem Außengewinde (31) versehenen zweiten Abschnitt (30) umfasst, und als zweites Element (32) eine Andruckfläche (19) mit einer senkrecht in die eingebrachte Gewindebohrung (34) zum Eingriff des zweiten Abschnittes (30) aufweist, mit folgenden Verfahrensschritten zum Umbiegen der Kragenteile (7):
- Axiales Einführen des Schraubenschaftes (28) in Aufnahmerichtung (a) in und durch den Gleitkörper bis zur Anlage der Unterseite des Schraubenkopfes (27) an den ersten Bund (3),
- Eingreifen des zweiten Abschnittes (30) in die Gewindebohrung (34)
- Verfahren der Andruckfläche (19) entgegen der Aufnahmerichtung (a) gegen die hintere Seitenfläche (16) des Lagerkörpers (13) unter gleichzeitigem Umbiegen der Kragenteile (7) zur Ausbildung des zweiten Bundes (8)

13. Verfahren nach einem der Ansprüche 10 bis 12 mit dem anschließenden Verfahrensschritt, dass das zusammengesetzte Gleitlagersystem (12) mit der hinteren Seitenfläche (16) des Lagerkörpers (13) als Anlagefläche (23) zur Anlage an das Bauteil gebracht und mit diesem über eine Befestigungsvorrichtung (21) so fest verbunden wird, dass der aus den umgebogenen Kragenteilen (7) gebildete zweite Bund (8) zwischen Bauteil und Anlagefläche (23) wirksam eingeklemmt wird.

## Claims

1. A plain bearing system for a shaft for carrying axial and/or radial forces of the shaft comprising a plain bearing (1) which has a hollow-cylindrical plain bearing body (2) and a radially outwardly extending first flange (3) arranged at a first end (4) of the plain bearing body (2), wherein provided at the second end (5) of the plain bearing body (2), which is in opposite relationship to the first end (4), is a ring (6) of peripherally spaced collar portions (7) which are bent over outwardly to afford a second flange (8), and comprising a bearing receiving means (11) which has a bearing body (13) with a receiving opening (14) adapted to the outside diameter (dₐ) of the plain bearing body (2) for receiving the plain bearing (1), **characterised in that** the receiving opening (14) opens into two side faces (15, 16) of the bearing body (13), which serve for contact of the two flanges (3, 8), a side face (15) which is at the front in the receiving direction (a) for contact of the first flange (13) and a side face (16) which is at the rear in the receiving direction (a) for contact of the second flange (8) formed by the bent-over collar portions (7).

2. A plain bearing system according to claim 1 **characterised in that** the axial length of the plain bearing body (2) is a small amount shorter than the axial length of the receiving opening (14).

3. A plain bearing system according to claim 2 or claim 3 **characterised in that** the wall thickness of the collar portions (7) is less than that of the plain bearing body (2).

4. A plain bearing system according to one of claims 1 to 3 **characterised in that** the inside diameter (dᵢ) of the plain bearing body (2) is equal to the inside diameter (dᵢ) of the ring (6).

5. A plain bearing system according to one of claims 1 to 4 **characterised in that** the collar portions (7) extend outwardly towards their free ends in an axial travel component at most to such an extent that they extend to the outside diameter (dₐ) of the plain bearing body (2).

6. A plain bearing system according to one of claims 1 to 5 **characterised in that** the collar portions (7) at their free ends have a bevel (24) which extends from the inside outwardly in the direction from the plain bearing body (2) towards the free ends.

7. A plain bearing system according to one of claims 1 to 6 **characterised by** being in the form of an integral injection moulded part.

8. A plain bearing system according to one of claims 1 to 7 **characterised in that** the rear side face (16) of the bearing body (13) is in the form of a contact face (23) for contact of the plain bearing system (12) against a component to which the plain bearing system (12) can be fitted.

9. A plain bearing system according to one of claims 1 to 8 **characterised by** a provided fixing device (21) for fixing the plain bearing system (12) with its contact face (23) to the component.

10. A method of assembling a plain bearing (1) for a shaft for carrying axial and/or radial forces of the shaft in a bearing receiving means (11), wherein the plain bearing (1) has a hollow-cylindrical plain bearing body (2) and a radially outwardly extending first flange (3) arranged at a first end (4) of the plain bearing body (2) and a ring (6), arranged at the second end (5) of the plain bearing body (2) which is in opposite relationship to the first end (4), of peripherally spaced axially extending collar portions (7) which can be bent over outwardly to afford a second flange (8), and the bearing receiving means (11) has a bearing body (13) with a receiving opening (14) adapted to the outside diameter (dₐ) of the plain bearing body (2) for receiving the plain bearing (1), comprising the following method steps:
- providing the plain bearing (1) and the bearing receiving means (11),
- passing the plain bearing (1) with its collar portions (7) and the subsequent plain bearing body (2) through the receiving opening (14) in such a way that its first flange (3) comes to bear with its inside that is towards the plain bearing body (2) against a side face (15) of the bearing body (13), that is the front side face in the receiving direction (a),
- bending over the axial collar portions (7) with their free ends in the radial direction by means of a tool so that the collar portions come to bear with their insides that are towards the plain bearing body (2) against a side face (16) of the bearing body (13), that is the rear side face in the receiving direction (a), and
- removing the tool.

11. A method according to claim 10 wherein the operation of bending over the collar portions (7) in a radial direction towards the rear side face (16) is effected in one working operation and the tool (17) in the working position bears with a first element (25) against the first flange (3) and for bending over the collar portions (7) is guided with a second element (32) in opposite relationship to the receiving direction (a) against the rear side face (16) of the bearing body (13).

12. A method according to claim 11 wherein the tool (17) as the first element (25) has a screw (26) with a screw head (27) and a screw shank (28) which includes a smooth first portion (29) which is closer to the screw head (27) and a second portion (30) which preferably adjoins the first portion to the free end and which is provided with a male screwthread (31), and as the second element (32) a pressure face (19) with a screwthreaded bore (34) provided perpendicularly therein for engagement of the second portion (30), comprising the following method steps for bending over the collar portions (7):
- axially introducing the screw shank (28) in the receiving direction (a) in and through the plain bearing body until the underside of the screw head (27) bears against the first flange (3),
- engaging the second portion (30) into the screwthreaded bore (34), and
- displacing the pressure face (19) in opposite relationship to the receiving direction (a) against the rear side face (16) of the bearing body (13) with the collar portions (7) being simultaneously bent over to form the second flange (8).

13. A method according to one of claims 10 to 12 with the further method step that the assembled plain bearing system (12) is brought to bear against the component with the rear side face (16) of the bearing body (13) as the contact face (23) and is fixedly connected thereto by way of a fixing device (21) such that the second flange (8) formed from the bent-over collar portions (7) is effectively clamped between the component and the contact face (23).

## Revendications

1. Système de palier lisse pour un arbre, destiné à encaisser des forces axiales et/ou radiales de l'arbre, comportant un palier lisse (1) qui présente un corps coulissant (2) cylindrique creux et une première collerette (3) agencée sur une première face frontale (4) du corps coulissant (2) et s'étendant radialement vers l'extérieur, et il est prévu sur la deuxième face frontale (5) du corps coulissant (2) opposée à la première face frontale (4) une couronne (6) de parties de collet (7) espacées sur la périphérie, qui sont recourbées vers l'extérieur pour former une deuxième collerette (8), et comportant un logement (11) qui présente un corps de palier (13) avec une ouverture de réception (14) adaptée au diamètre extérieur (dₐ) du corps coulissant (2) pour recevoir le palier lisse (1), **caractérisé en ce que** l'ouverture de réception (14) débouche dans deux faces latérales (15, 16) du corps de palier (13), servant à l'appui des deux collerettes (3, 8), et **en ce qu'**il est prévu une surface latérale (15) antérieure en direction de réception (a) servant à l'appui de la première collerette (3) et une surface latérale (16) postérieure en direction de réception (a) pour l'appui de la deuxième collerette (8) formée par les parties de collet (7) recourbées.

2. Système de palier lisse selon la revendication 1, **caractérisé en ce que** la longueur axiale du corps coulissant (2) est légèrement plus petite que la longueur axiale de l'ouverture de réception (14).

3. Système de palier lisse selon la revendication 1 ou 2, **caractérisé en ce que** l'épaisseur de paroi des parties de collet (7) est plus faible que celle du corps coulissant (2).

4. Système de palier lisse selon l'une des revendications 1 à 3, **caractérisé en ce que** le diamètre intérieur (dᵢ) du corps coulissant (2) est égal au diamètre intérieur (dᵢ) de la couronne (6).

5. Système de palier lisse selon l'une des revendications 1 à 4, **caractérisé en ce que** les parties de collet (7) s'étendent vers leurs extrémités libres dans une composante de course axiale au plus aussi loin vers l'extérieur qu'elles parviennent au diamètre extérieur (dₐ) du corps coulissant (2).

6. Système de palier lisse selon l'une des revendications 1 à 5, **caractérisé en ce que** les parties de collet (7) présentent à leurs extrémités libres un chanfrein (24) qui s'étend depuis l'intérieur vers l'extérieur en direction du corps coulissant (2) vers les extrémités libres.

7. Système de palier lisse selon l'une des revendications 1 à 6, **caractérisé par** une réalisation sous forme de pièce moulée par injection d'un seul tenant.

8. Système de palier lisse selon l'une des revendications 1 à 7, **caractérisé en ce que** la surface latérale (16) postérieure du corps de palier (13) est conçue en tant que surface d'appui (23) pour l'appui du système de palier lisse (12) sur un composant sur lequel le système de palier lisse (12) peut être monté.

9. Système de palier lisse selon l'une des revendications 1 à 8, **caractérisé par** un dispositif de fixation (21) prévu pour la fixation du système de palier lisse (12) avec sa surface d'appui (23) sur le composant.

10. Procédé de montage d'un palier lisse (1) pour un arbre destiné à encaisser des forces axiales et/ou radiales de l'arbre dans un logement de palier (11), dans lequel le palier lisse (1) qui présente un corps coulissant cylindrique creux (2) et une première collerette (3) agencée sur une première face frontale (4) du corps coulissant (2) et s'étendant radialement vers l'extérieur, et une couronne (6), agencée sur la deuxième face frontale (5) du corps coulissant (2), opposée à la première face frontale (4), formée de parties de collet (7) qui s'étendent axialement et sont espacées sur la périphérie, qui peuvent être recourbées vers l'extérieur pour former une deuxième collerette (8), et le logement (11) présente un corps de palier (13) avec une ouverture de réception (14) adaptée au diamètre extérieur (dₐ) du corps coulissant (2) pour recevoir le palier lisse (1), comportant les étapes de procédé suivantes :
- mettre à disposition le palier lisse (1) et le logement de palier (11),
- faire passer le palier lisse (1) avec ses parties de collet (7) et le corps coulissant (2) qui suit à travers l'ouverture de réception (14), de telle sorte que sa première collerette (3) vient avec sa face intérieure tournée vers le corps coulissant (2) en appui sur une face latérale (15) antérieure en direction de réception (a), du corps coulissant (13),
- recourber les parties de collet (7) axiales avec leurs extrémités libres en direction radiale au moyen d'un outil, de telle sorte que les parties de collet viennent avec leurs faces intérieures tournées vers le corps coulissant (2) en appui sur une face latérale (16) postérieure en direction de réception (a), du corps de palier (13),
- enlever l'outil.

11. Procédé selon la revendication 10, dans lequel le recourbement des parties de collet (7) en direction radiale jusqu'à la face latérale (16) postérieure a lieu en une passe de travail et dans lequel l'outil (17) est en appui avec un premier élément (25) en position de travail sur la première collerette (3) et pour recourber les parties de collet (7), il est guidé avec un deuxième élément (32) à l'encontre de la direction de réception (a) contre la face latérale (16) postérieure du corps de palier (13).

12. Procédé selon la revendication 11, dans lequel l'outil (17) présente en tant que premier élément (25) une vis (26) avec une tête de vis (27), une tige de vis (28) qui comprend un premier tronçon (29) lisse plus proche de la tête de vis (27) ainsi qu'un deuxième tronçon (30) se raccordant de préférence à celui-ci jusqu'à l'extrémité libre et pourvu d'un filetage extérieur (31), et en tant que deuxième élément (32) une surface de pression (19) avec un perçage taraudé (34) ménagé perpendiculairement pour l'engagement du deuxième tronçon (30), comportant les étapes de procédé suivantes pour recourber les parties de collet (7) :
- introduire axialement la tige de vis (28) en direction de réception (a) dans et à travers le corps coulissant jusqu'à la venue en appui de la face inférieure de la tête de vis (27) sur la première collerette (3),
- engager le deuxième tronçon (30) dans le perçage taraudé (34),
- déplacer la surface de pression (19) à l'encontre de la direction de réception (a) contre la surface latérale (16) postérieure du corps de palier (13) en recourbant en même temps les parties de collet (7) pour former la deuxième collerette (8).

13. Procédé selon l'une des revendications 10 à 12 avec l'étape de procédé suivante selon laquelle le système de palier lisse (12) assemblé est amené en appui avec la face latérale (16) postérieure du corps de palier (13) en tant que surface d'appui (23) contre le composant et est relié à celui-ci via un dispositif de fixation (21) de manière solidaire, de telle sorte que la deuxième collerette (8) formée par les parties de collet (7) recourbées est coincé de manière efficace entre le composant et la surface d'appui (23).
